# EUROPÄISCHE PATENTSCHRIFT

(11) **EP 0 661 201 B1**
(45) Veröffentlichungstag und Bekanntmachung des Hinweises auf die Patenterteilung: **28.08.1996**
(21) Anmeldenummer: 94118395.6
(22) Anmeldetag: 23.11.1994
(51) Int. Cl.: B62D 25/08, B62D 27/06

(54) **Kraftfahrzeug sowie Verfahren zur Herstellung eines Kraftfahrzeuges**
Motor vehicle and method for the production of a motor vehicle
Véhicule automobile et procédé de fabrication d'un véhicule automobile

(30) Priorität: 24.12.1993 DE 4344581
(43) Veröffentlichungstag der Anmeldung: 05.07.1995
(73) Patentinhaber: MERCEDES-BENZ AG, 70327 Stuttgart (DE)
(72) Erfinder: Benz, Erwin, D-75391 Gechingen (DE); Burk, Gerhard, D-71069 Sindelfingen (DE); Trost, Werner, D-72622 Nürtingen (DE); Schwuchow, Norbert, D-71/071 D-71067 Sindelfingen (DE); Deibler, Martin, D-73732 Esslingen (DE)

(56) Entgegenhaltungen:
- EP-A- 0 063 372
- DE-A- 3 820 644
- DE-A- 4 341 355
- NL-C- 38 545
- US-A- 2 997 122
- PATENT ABSTRACTS OF JAPAN vol. 13 no. 237 (M-833) ,5.Juni 1989 & JP-A-01 047640 (NISSAN) 22.Februar 1989,

## Beschreibung

Die Erfindung betrifft ein Kraftfahrzeug gemäß dem Oberbegriff des Anspruchs 1 sowie ein verfahren zur Herstellung eines Kraftfahrzeuges gemäß dem Oberbegriff des Anspruchs 14, wie beides aus der EP 378 260 A1 als bekannt hervorgeht.

Die EP 378 260 A1 betrifft ein Trägerteil, an dem zur Verminderung des Aufwandes beim Einbau von Zusatzaggregaten bei der Montage und im Reparaturfall außerhalb des Rahmens verschiedene Zusatzaggregate an dem Trägerteil vormontierbar sind. Nach der Vormontage der Zusatzaggregate wird dieses Trägerteil nach Fertigstellung der Karosserie an der Karosserie angeordnet. Die Anordnung des Trägerteiles an der Karosserie erfolgt insbesondere durch ein Verrasten. Hiernach wird die Verkabelung der Zusatzaggregate verlegt und entsprechend angeschlossen. Die Verlegung der Verkabelung ist, jedoch bedingt durch die hohe Anzahl der in den heutigen Kraftfahrzeugen verbauten Zusatzaggregaten, insbesondere bei Reparaturen zeit- und damit kostenintensiv.

Aus der DE 40 08 896 A1 ist ein Vorbau einer Kraftfahrzeug-Karosserie im Bereich des Radkastens bekannt, bei dem der Vorbau zur Verstärkung der Karosseriesteifigkeit einen inneren, tragenden Rahmen aufweist, der hauptsächlich zur Steifigkeit der Karosserie beiträgt und der im Bereich des Radkastens eine zusätzliche Strebe aufweist. Den äußeren Abschluß dieses Rahmens bildet das Blech des Radkastens, daß den Rahmen nach außen in der Art einer Abdeckplatte bedeckt. Ist derart die Rohkarosserie hergestellt, wird sie lackiert und anschließend der Motor und je nach Ausstattung diverse Zusatzaggregate an die Innenseite des Rahmens montiert. Dieser Aufwand ist jedoch relativ hoch, da je nach Ausstattung des zu montierenden Fahrzeuges unterschiedliche Zusatzaggregate verbaut werden. Dies erfordert einem hohen Aufwand bei der Verlegung bspw. der elektrischen und/oder der pneumatischen Anschlüsse der Zusatzaggregate, im folgenden Verkabelung genannt. Zusätzlich ist hierbei stets noch eine Verwechslungsgefahr latent, die eine kostspielige Nacharbeit erfordert. Des weiteren ist im Falle einer Reparatur der Aufwand durch die vielmals kompakte Verlegung der Verkabelung der verschiedenen Zusatzaggregate sehr hoch.

Die Aufgabe der Erfindung ist es, ein Kraftfahrzeug bzw. ein Verfahren zur Herstellung des Kraftfahrzeuges zu entwickeln, daß auch bei einer direkt an einem Montageband verbaubaren, frei wählbar Typenvielfalt und unterschiedlichen Ausstattungen, die gesamte Montage, ebenso wie die Demontage und Reparatur mit Zusatzaggregaten, Motor usw. kostengünstig vorgenommen werden kann.

Die Aufgabe wird bei dem zugrundegelegten Kraftfahrzeug mit den kennzeichnenden Merkmalen des Anspruchs 1, bzw. bzgl. des Verfahren mit den kennzeichnenden Verfahrensschritten des Anspruchs 14 gelöst. Bei einem mit dem erfindungsgemäßen Verfahren hergestellten Kraftfahrzeug ist es möglich, die Montage und die Verkabelung der Zusatzaggregate sowohl von innen, als auch von außen der Außenhaut der Karosserie vorzunehmen, was mit einer einfacheren und schnelleren Montage, Demontage und Reparatur verbunden ist. Des weiteren kann die bisher notwendige und unübersichtliche Verlegung der Verkabelung um die Zusatzaggregate und andere Anbauteil herum in gewissem Maße entwirrt werden, da nunmehr auch die Verkabelung zwischen dem tragenden Rahmen und der die Außenhaut der Karosserie bildenden Abdeckplatte ermöglicht ist; d.h. die Verlegung der Verkabelung kann nunmehr in zumindest zwei Ebenen erfolgen, ohne daß irgendwelche, den Kabelverlauf beeinflussende und zusätzlich zu montierende Zusatzkonstruktionen bzw. Haltekonsolen notwendig sind, wodurch auch die Ästhetik des Motorraumes verbessert wird. Durch das Trägerteil ist ferner eine bislang aufgrund der Ausstattungsvielfalt von an einem Band montierten Kraftfahrzeugen vorhanden und mit kostenintensiver Nacharbeit verbundene Verwechslungsgefahr von Zusatzaggregaten wirkungsvoll vermindert.

Ferner hat es sich hierbei als günstig erwiesen, daß die Funktionen der Zusatzaggregate auf den bestückten Trägerteilen in der Art von Modulen vor Einbau geprüft, und bei einer Reparatur auch komplett ausgetauscht werden können, wodurch sich bspw. die Arbeitszeit und damit i.a. die Reparaturkosten verringern.

Da die Abdeckplatte des weiteren keine bzw. nur noch in geringem Umfang eine tragende Funktion ausübt, kann diese aus einem nichtrostenden und/oder leichten Material, wie Plastik oder möglicherweise auch aus Recyclingstoffen hergestellt werden und in einfacher, lösbarer Weise an dem Rahmen befestigt werden.

In vorteilhafter Weise kann das Trägerteil derart konstruiert werden, daß die bei einem Unfall von einer Verlagerung der auf dem Trägerteil montierten Zusatzaggregate ausgehende Gefahr auf einfache Weise verringert ist. Die Verringerung dieser Gefahr ist bspw. dadurch möglich, daß der Trägerrahmen derart am tragenden Rahmen befestigt ist, daß er bei einem Unfall nach oben ausweichen kann, wodurch keines der daran angeordneten Zusatzaggregate in den Fahrgastraum eindringen kann.

Weitere sinnvolle Ausgestaltungen der Erfindung sind den Unteransprüchen entnehmbar und werden anhand eines in den Figuren dargestellten Ausführungsbeispieles im folgenden erläutert. Dabei zeigt
- Fig. 1: eine Explosionszeichnung eines vorderen rechten Radlaufes mit zu montierendem gitterartigen Trägerteil mit Schwingungstilger und einer den Radkasten des Radlaufes bildenden Abdeckplatte,
- Fig. 2: die am tragenden Rahmen montierte Teile nach Figur 1 ohne Schwingungstilger,
- Fig. 3: mehrere im Bereich des vorderen rechten Radlaufes an einem am tragenden Rahmen angeordneten Zwischenteil parallel zueinander montierte plattenartige Trägerteile,
- Fig. 4: eine Ansicht auf eine am tragenden Rahmen angeordneten Ausgleichsbehälter mit daran angeordnetem Trägerteil,
- Fig. 4a: die Ansicht in x-Richtung auf die Befestigung des Trägerteiles an dem Ausgleichsbehälter nach Figur 4,
- Fig. 4b: die Ansicht in y-Richtung auf die Befestigung des Trägerteiles an dem Ausgleichsbehälter nach Figur 4 und
- Fig. 4c: die Ansicht in z-Richtung auf die Befestigung des Trägerteiles an dem Ausgleichsbehälter nach Figur 4.

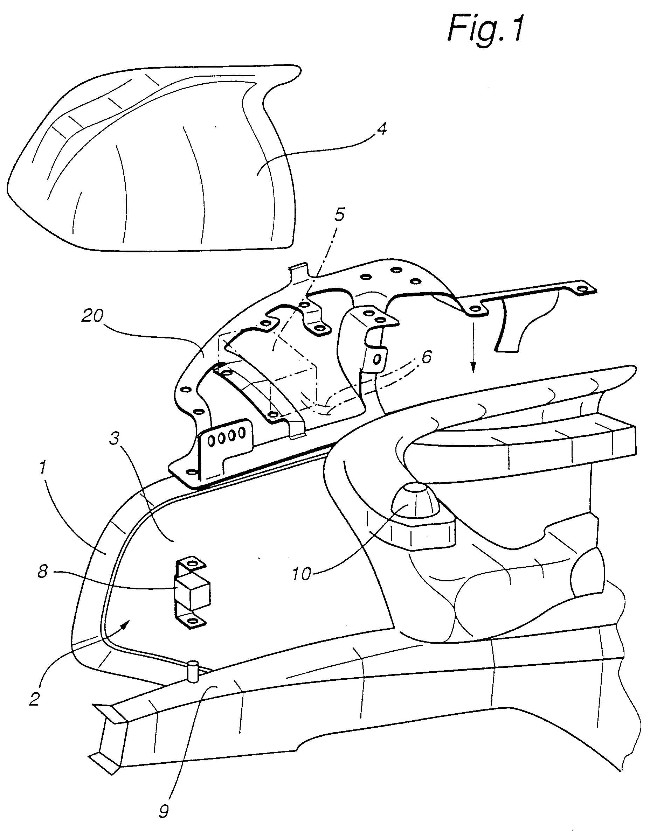

In Figur 1 ist eine Explosionszeichnung eines vorderen rechten Radlaufes 2 eines Kraftfahrzeuges mit zu montierendem skelett- und/oder gitterartigen Trägerteil 20 und einer den Radkasten des Radlaufes 2 ausbildenden Abdeckplatte 4 dargestellt, wobei das Kraftfahrzeug im Bereich des Radlaufes 2 einen skelettartigen, mit einem Durchbruch 3 versehenen, tragenden Rahmen 1 aufweist, an dem innenseitig das Trägerteil 20 und außenseitig die Abdeckplatte 4 befestigbar ist.

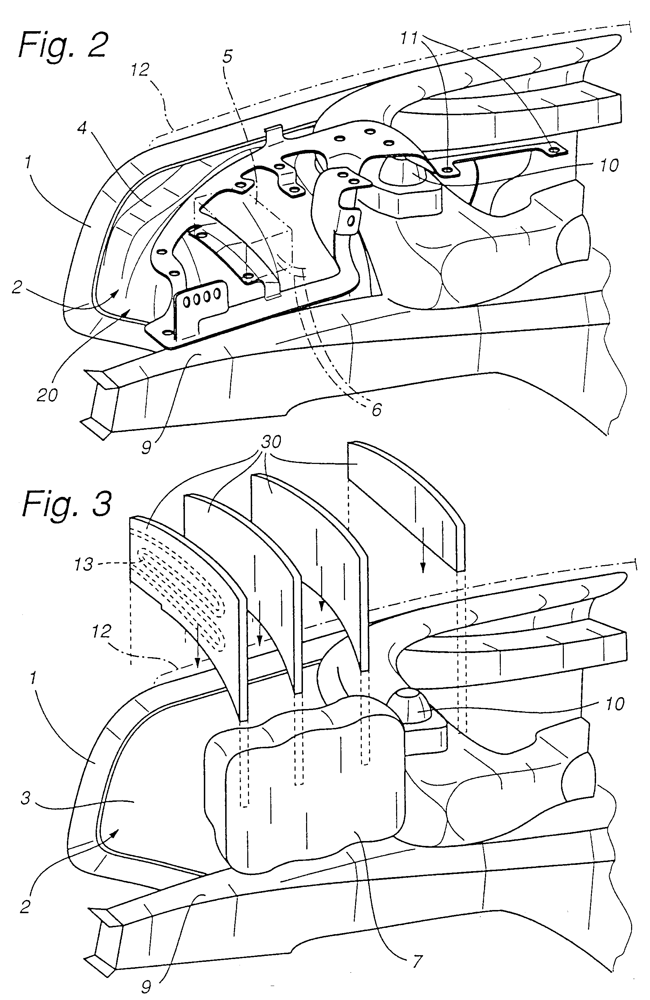

Der Zusammenbau der in der Explosionszeichnung dargestellten Teile ist in Figur 2 dargestellt. Der räumlicher Verlauf des gitterartigen Trägerteiles 20 ist in etwa der inneren, den tragenden Rahmen 1 bedeckenden Hüllfläche nachgebildet. An dem Trägerteil 20 werden diverse Zusatzaggregate 5 wie bspw. eine Zündspule, eine Diagnosedose, Ausgleichsbehälter usw. mit ihren Anschlußleitungen 6 vormontiert. Zur Vormontage der Zusatzaggregate 5 weist das Trägerteil 20 Befestigungspunkte 11, wie Gewindebohrungen, hinterfaßbare Durchbrüche für Verrastungen oder dergleichen auf, an denen die Zusatzaggregate 5, insbesondere zusammen mit ihren Anschlußleitungen 6 festgeschraubt werden. Das mit den Zusatzaggregaten 5 bestückte Trägerteil 20 wird nach der Lackierung des Fahrzeuges in den Motorraum des Kraftfahrzeuges eingesetzt und an den an dem tragenden Rahmen 1 angeordneten Schrauben, festgeschraubt. Die Befestigungspunkte 11 des Trägerteiles 20 sind vorzugsweise an dem vorderen Längsträger 9 des Rahmens 1 des Fahrzeuges und an der oberen Längspartie des Rahmen 1 und da insbesondere an dem Federdom 10 der Radaufhängung angeordnet. Bei dieser Art der Befestigung des Trägerteiles 20 kann das Trägerteil 20 vorteilhafterweise derart ausgebildet sein, daß es zusätzlich zur Aufnahme der Zusatzaggregate 5 noch eine abstützende und tragende Funktion aufweist.

Die noch losen Anschlußleitungen 6 werden anschließend verlegt, wobei sie entlang des Trägerteiles 20, zwischen dem Trägerteil 20 und dem tragenden Rahmen 1 und/oder außenseitig an dem tragenden Rahmen 1 verlaufen können. Die Verlegung der Anschlußleitungen 6 ist in hohem Maße vereinfacht, da die Zugänglichkeit für einen Werker, aber auch für ein Automat sowohl innenseitig als auch durch den Durchbruch 3 im Bereich des Radlaufes 2 hindurch außenseitig möglich ist, da die den Radkasten bildende Abdeckplatte 4 erst der nach der Verlegung der Anschlußleitungen 6 an den Rahmen 1 angebracht wird.

In besonderer Ausgestaltung können die Anschlußleitungen 6 der Zusatzaggregate 5 auch direkt an das Trägerteil 20 angeordnet werden, wodurch das Anschließen der Anschlußleitungen 6 beim Befestigen des Trägerteiles 20 an den tragenden Rahmen 1 erfolgen kann. Die Verlegung der fahrzeugseitig zu den Anschlüssen führenden Zufuhr- oder Abfuhrleitungen ist, bedingt durch die bessere Zugänglichkeit, dadurch nochmals vereinfacht.

Vorteilhafterweise wird bei der Befestigung des Trägerteiles 20 zwischen den Rahmen 1 und dem Trägerteil 20 ein Schwingungstilger 8 angeordnet, der die Schwingungen der auf dem Trägerteil 20 angeordneten Zusatzaggregate 5 zumindest reduziert. Dies ist insbesondere daher von Vorteil, da dadurch nur noch die Schwingungsanregung des gesamten Trägerteiles 20 mit montierten Zusatzaggregaten 5 berücksichtigt werden muß, und nicht eine jede Schwingungsanregung eines jeden einzelnen Zusatzaggregates 5 für sich allein. Ferner ist die zur Schwingungstilgung benötigte Anzahl von schwingungsdämpfenden bzw. -tilgenden Bauteilen reduziert, wodurch eine Vereinfachung der Montage und der Demontage sowie eine Kostenreduzierung verbunden ist.

In Figur 3 sind mehrere am vorderen rechten Radlauf 2 parallel zueinander montierte Trägerteile 30 dargestellt, die im Gegensatz zu dem Trägerteil 20 des Ausführungsbeispieles nach Figur 1 bzw. 2 plattenartig ausgebildet sind. Durch diese Art der Gestaltung dieses Trägerteiles 30 kann es parallel und quer zur Hüllkurve des Rahmens 1; d.h. vom Rahmen 1 abragend, angeordnet werden.

Hierbei hat es sich als günstig erwiesen, diese Trägerteile 30 gegen die zur z-Achse parallele Vertikalachse zu neigen, da dadurch bei einem Unfall durch ein schräges, schieferartiges aneinander Gleiten der mit den Zusatzaggregaten 5 bestückten Trägerteile 30 eine Blockbildung der Trägerteile 30 vermieden wird. Vor dem Hintergrund der Unfallsicherheit ist es ebenfalls sinnvoll, bei geschlossener Motorhaube 12 die Trägerteile 30 mit der Motorhaube 12 insbesondere durch ein Verrasten und oder ein Hintergreifen und/oder ein Verriegeln zu befestigen und sie rahmenseitig derart zu befestigen, daß sie ab einer bestimmten auf die Befestigung wirkenden Zugkraft aus ihrer Verankerung lösbar sind. Dadurch können die Trägerteile 30 durch die bei einem Unfall nach oben abwinkelnde Motorhaube 12 herausgezogen werden, wodurch mehr Raum zur Energieabsorbtion verbleibt.

Im Falle von sich im Betrieb erwärmenden elektrischen Zusatzaggregaten 5 ist es sinnvoll, das Trägerteil 30 mit wärmeabführenden Maßnahmen, wie Kühlrippen oder Kühlkanälen 13 zu versehen, die zur Kühlung dieser Zusatzaggregate 5 führen. Hier ist es günstig, daß alle derartigen Zusatzaggregate 5 eines Trägerteiles 30 gleichzeitig berücksichtigbar sind.

Des weiteren bietet sich hier die Möglichkeit, eine jede Trägerteile 30 mit insbesondere beidseitig angeordneten Zusatzaggregaten 5 einer vorgebbaren Konstellation zu bestücken, wodurch je nach Ausführungsvariante des Fahrzeuges auf bestimmte Trägerteile 30 verzichtet werden kann bzw. bestimmte Zusatzaggregate zusätzlich eingebaut werden können. Um eine Verwechslungsgefahr zu vermeiden, ist es sinnvoll, die Befestigungspunkte 11 für die unterschiedlichen Trägerteile 30 voneinander verschieden zu gestalten, so daß an dem Ort einer bestimmten Trägerteilen 30 nur diese angeordnet werden kann.

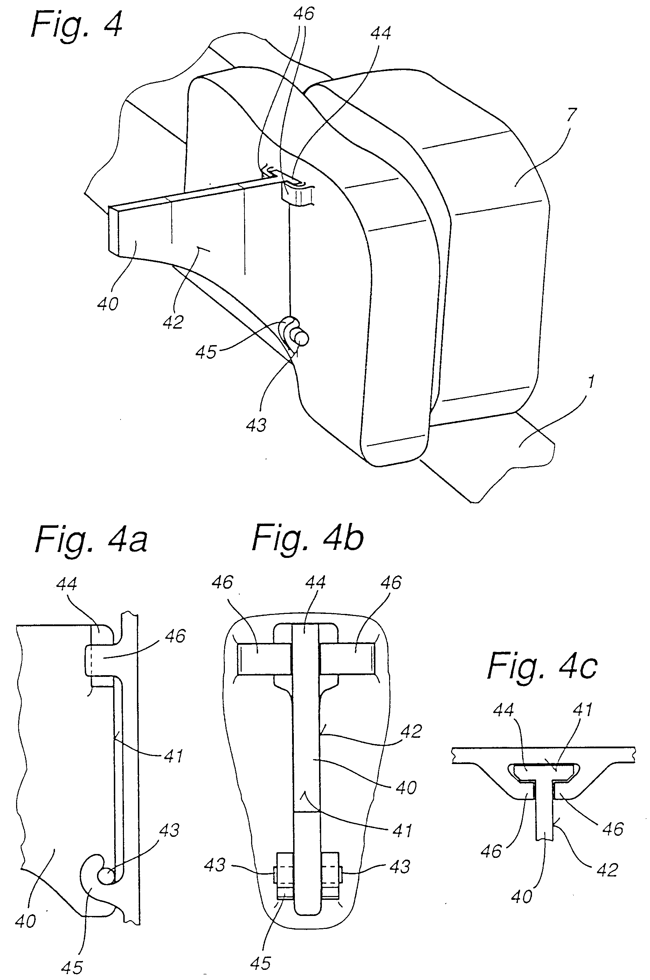

In Figur 4 ist eine Ansicht auf eine am tragenden Rahmen 1 angeordneten Zwischenteil 7 mit daran angeordnetem Trägerteil 40 dargestellt. Das Trägerteil 40 nach Figur 4 ist als weitgehend ebene plattenartige Steckplatte ausgebildet, an der die Zusatzaggregate 5 ansteckbar, insbesondere verrastbar sind. Das Trägerteil 40 selbst ist an einem Zwischenteil 7 angeordnet, wobei das Zwischenteil 7 vorteilhafterweise durch einen Ausgleichsbehälter gebildet ist.

Von dem Ausgleichsbehälter, der seinerseits an dem tragenden Rahmen 1 durch Verschrauben, Verrasten oder dgl. festgelegt ist, ragt das Trägerteil 40 quer zum Rahmen 1 und senkrecht von der Oberfläche derjenigen Seite des Zwischenteiles 7 ab, an der es an einer seiner Schmalseiten befestigt ist.

Eine mögliche einfache Befestigung des Trägerteiles 40 des plattenartigen Trägerteiles 40 nach Figur 4 an dem als Zwischenteil 7 verwandten Ausgleichsbehälter ist in Ansichten aus verschiedenen Richtungen in den Figuren 4a bis 4c dargestellt. Hierbei zeigt Figur 4a die Ansicht in x-Richtung, Figur 4b die Ansicht in y-Richtung und Figur 4c die Ansicht in z-Richtung.

Zur Befestigung weist das Trägerteil 40 an dem fahrzeugseitig unteren Bereich seiner dem Zwischenteil 7 zugewandten Schmalseite 41 einen beidseitig quer zu seinen Flachseiten 42 abragenden Bolzen 43 und an dem oberen Bereich der Schmalseite 41 einen beidseitig abragenden durch Flachstücke gebildeten Kragen 44 auf.

Dem Bolzen 43 ist zwischenteilseitig eine nach oben hin offene Öse 45 zugeordnet, deren Öffnungsweite geringer als der Bolzendurchmesser des Bolzens 43 ist, und die in der Vertikalrichtung (z-Richtung), die der Einsteckrichtung des Trägerteiles entspricht, eine Nut aufweist, deren lichte Weite größer oder gleich der Breite der Schmalseite 41 ist, so daß der Bolzen 43 in der Öse 45 verrasten und das Trägerteil 40 an diesem unteren Bereich gehalten ist. Des weiteren weist das Zwischenteil 7 eine bei vollständig eingestecktem Trägerteil 40 den Kragen 44 umfassende und durch zwei parallel zur Oberfläche des Ausgleichbehälters ausgerichtete Haltefinger 46 gebildete Führungsnut auf, in die der Kragen 44 des Trägerteiles 40 eingeschoben ist.

Durch den Kragen 44, die zugeordneten Haltefinger 46 und den Bolzen 43 mit zugeordneter Öse 45 weist das Trägerteil 40 außer der Halterung in der x-y-Ebene gleichzeitig Halterung gegen eine parallel zur z-Achse ausgerichtete Schwenkachse auf.

## Patentansprüche

1. Kraftfahrzeug mit im Motorraum angeordnetem und an tragenden Strukturteilen des Fahrzeugvorbaus zumindest mittelbar befestigbaren Trägerteil für vormontierbare Zusatzaggregate, deren Anschlußleitungen innerhalb des Motorraumes verlegt sind,
**dadurch gekennzeichnet,**
- daß die tragenden Strukturteile durch eine zumindest einen Durchbruch (3) aufweisende Rahmenkonstruktion, im folgenden tragender Rahmen (1) genannt, gebildet sind,
- daß das Trägerteil (20, 30, 40) im Bereich des Radlaufes (2) befestigt ist,
- daß der Rahmen (1) im Bereich des Radlaufes (2) wenigstens einen Durchbruch (3) aufweist und
- daß der Durchbruch (3) durch eine außenseitig anbringbare Abdeckplatte (4) nachträglich, d.h. nach dem Anbringen des mit den Zusatzaggregaten (5) bestückten Trägerteiles (20, 30, 40) und der Anschlußleitungen (6), verschlossen wird.

2. Kraftfahrzeug nach Anspruch 1,
**dadurch gekennzeichnet,**
daß die Anschlußleitung (6) eines Zusatzaggregates (5) zumindest teilweise zwischen dem Trägerteil (20, 30, 40) und der Abdeckplatte (4), insbesondere zwischen dem Trägerteil (20, 30, 40) und dem tragenden Rahmen (1) verlegt ist.

3. Kraftfahrzeug nach Anspruch 1,
**dadurch gekennzeichnet,**
daß das Trägerteil (20, 30, 40) über ein Zwischenteil (7) an dem tragenden Rahmen (1) angeordnet ist.

4. Kraftfahrzeug nach Anspruch 1,
**dadurch gekennzeichnet,**
daß zwischen dem Trägerteil (20, 30, 40) und dem tragenden Rahmen (1) zumindest ein schwingungsdämpfendes Element, insbesondere ein Schwingungstilger (8) angeordnet ist.

5. Kraftfahrzeug nach Anspruch 1,
**dadurch gekennzeichnet,**
daß das Trägerteil (20, 30, 40) Kühlrippen und/oder -kanäle (13) zur Wärmeabfuhr aus den Zusatzaggregaten (5) aufweist.

6. Kraftfahrzeug nach Anspruch 1,
**dadurch gekennzeichnet,**
daß das Trägerteil (20, 30, 40) an dem vorderen Längsträger (9) der Karosserie und an der oberen Längspartie des Rahmens (1), insbesondere im Bereich des Federdoms (10) der Radaufhängung angeordnet ist.

7. Kraftfahrzeug nach Anspruch 1,
**dadurch gekennzeichnet,**
daß das Trägerteil (20, 30, 40) eine abstützende und stabilisierende Funktion aufweist.

8. Kraftfahrzeug nach Anspruch 1,
**dadurch gekennzeichnet,**
daß das Trägerteil (20) gitterförmig ausgebildet ist, daß das Trägerteil (20) der Innenkontur des Rahmens (1) entsprechend nachgebildet ist, und daß das Trägerteil (20) Befestigungspunkte (11) zur Vormontage der Zusatzaggregate (5) aufweist.

9. Kraftfahrzeug nach Anspruch 1,
**dadurch gekennzeichnet,**
daß das Trägerteil (30, 40) als weitgehend ebene Steckplatte ausgebildet ist, an der die Zusatzaggregate (5) ansteckbar, insbesondere anclipsbar sind und daS das Trägerlieil (30, 40) quer zum Rahmen (1) und von diesem abragend angeordnet ist.

10. Kraftfahrzeug nach Anspruch 9,
**dadurch gekennzeichnet,**
daß mehrere Trägerteile (30, 40) von dem Rahmen (1) abragend und parallel zueinander im Bereich des Radlaufes (2) angeordnet sind.

11. Kraftfahrzeug nach Anspruch 9,
**dadurch gekennzeichnet,**
daß das Trägerteil (30, 40) beidseitig angeordnete Zusatzaggregate (5) aufweist.

12. Kraftfahrzeug nach Anspruch 9,
**dadurch gekennzeichnet,**
daß das Trägerteil (30, 40) bei geschlossener Motorhaube (12) mit der Motorhaube (11) verbunden ist.

13. Kraftfahrzeug nach Anspruch 12,
**dadurch gekennzeichnet,**
daß das Trägerteil (30, 40) mit der Motorhaube (12) verrastet und/oder hinterfaßt und/oder verriegelt ist.

14. Verfahren zum Herstellen eines Kraftfahrzeuges, mit im Motorraum angeordnetem und an tragenden Strukturteilen des Fahrzeugvorbaus zumindest mittelbar befestigbaren Trägerteil für vormontierbare Zusatzaggregate, bei welchem Verfahren das Trägerteil und die Anschlußleitungen der Zusatzaggregate in den Motorraum eingebaut werden,
zur Herstellung eines Kraftfahrzeuges nach Anspruch 1,
**dadurch gekennzeichnet**,
- daß eine im Bereich des Radlaufes (2) zumindest einen Durchbruch (3) aufweisende Rahmenkonstruktion, im folgenden tragender Rahmen (1) genannt, als tragende Struktur des Kraftfahrzeuges hergestellt wird,
- daß das Trägerteil (20, 30, 40) nach dem Lackieren des tragenden Rahmens (1) im Bereich des Durchbruches (3) befestigt und die Anschlußleitungen (6) verlegt bzw. angeschlossen werden, und
- daß danach der Durchbruch (3) durch eine Abdeckplatte (4) verschlossen wird.

15. Verfahren nach Anspruch 14,
**dadurch gekennzeichnet,**
daß die Anschlußleitung (6) eines Zusatzaggregates (5) zumindest teilweise zwischen dem tragenden Rahmen (1) und der Abdeckplatte (4) verlegt wird.

16. Verfahren nach Anspruch 14,
**dadurch gekennzeichnet,**
daß die Anschlußleitung (6) eines Zusatzaggregates (5) zwischen dem Trägerteil (20, 30, 40) und der Abdeckplatte (4), insbesondere zwischen dem Rahmen (1) und dem Trägerteil (20, 30, 40) verlegt wird.

## Claims

1. Motor vehicle with a bearer part arranged in the engine compartment and fastenable at least indirectly to supporting structural parts of the front part of the vehicle, for pre-assemblable additional units, the connecting lines of which are laid within the engine compartment, characterized in that
- the supporting structural parts are formed by a frame construction, hereafter called a supporting frame (1), which has at least one perforation (3),
- the bearer part (20, 30, 40) is fastened in the region of the wheel housing (2),
- the frame (1) has at least one perforation (3) in the region of the wheel housing (2), and
- the perforation (3) is closed subsequently, that is to say after the mounting of the bearer part (20, 30, 40) equipped with the additional units (5) and of the connecting lines (6), by means of a cover plate (4) which can be attached on the outside.

2. Motor vehicle according to Claim 1, characterized in that the connecting line (6) of an additional unit (5) is laid at least partially between the bearer part (20, 30, 40) and the cover plate (4), especially between the bearer part (20, 30, 40) and the supporting frame (1).

3. Motor vehicle according to Claim 1, characterized in that the bearer part (20, 30, 40) is arranged on the supporting frame (1) via an intermediate part (7).

4. Motor vehicle according to Claim 1, characterized in that at least one oscillation-attenuating element, especially an oscillation damper (8), is arranged between the bearer part (20, 30, 40) and the supporting frame (1).

5. Motor vehicle according to Claim 1, characterized in that the bearer part (20, 30, 40) has cooling ribs and/or cooling ducts (13) for the dissipation of heat from the additional units (5).

6. Motor vehicle according to Claim 1, characterized in that the bearer part (20, 30, 40) is arranged on the front side member (9) of the body and on the upper longitudinal portion of the frame (1), especially in the region of the spring dome (10) of the wheel suspension.

7. Motor vehicle according to Claim 1, characterized in that the bearer part (20, 30, 40) has a supporting and stabilizing function.

8. Motor vehicle according to Claim 1, characterized in that the bearer part (20) is of lattice-shaped design, in that the bearer part (20) reproduces the inner contour of the frame (1), and in that the bearer part (20) has fastening points (11) for the preassembly of the additional units (5).

9. Motor vehicle according to Claim 1, characterized in that the bearer part (30, 40) is designed as a largely plane plug board, on which the additional units (5) can be plugged, especially snapped, and in that the bearer part (30, 40) is arranged transversely relative to the frame (1) and so as to project from the latter.

10. Motor vehicle according to Claim 9, characterized in that a plurality of bearer parts (30, 40) are arranged so as to project from the frame (1) and parallel to one another in the region of the wheel housing (2).

11. Motor vehicle according to Claim 9, characterized in that the bearer part (30, 40) has additional units (5) arranged on both sides.

12. Motor vehicle according to Claim 9, characterized in that, with the engine bonnet (12) closed, the bearer part (30, 40) is connected to the engine bonnet (11).

13. Motor vehicle according to Claim 12, characterized in that the bearer part (30, 40) is interlocked and/or caught behind and/or latched with the engine bonnet (12).

14. Process for the production of a motor vehicle, with a bearer part arranged in the engine compartment and fastenable at least indirectly to supporting structural parts of the front part of the vehicle, for pre-assemblable additional units, in which process the bearer part and the connecting lines of the additional units are installed in the engine compartment, for the production of a motor vehicle according to Claim 1, characterized in that
- a frame construction, hereafter called a supporting frame (1), having at least one perforation (3) in the region of the wheel housing (2) is produced as a supporting structure of the motor vehicle,
- after the supporting frame (1) has been painted, the bearer part (20, 30, 40) is fastened in the region of the perforation (3) and the connecting lines (6) are laid or connected, and
- the perforation (3) is subsequently closed by means of a cover plate (4).

15. Process according to Claim 14, characterized in that the connecting line (6) of an additional unit (5) is laid at least partially between the supporting frame (1) and the cover plate (4).

16. Process according to Claim 14, characterized in that the connecting line (6) of an additional unit (5) is laid between the bearer part (20, 30, 40) and the cover plate (4), especially between the frame (1) and the bearer part (20, 30, 40).

## Revendications

1. Véhicule automobile avec partie support, disposée dans le compartiment moteur et pouvant être fixée au moins indirectement sur des parties de structure portantes de la partie avant du véhicule, pour des groupes supplémentaires prémontables, dont les conduites de raccordement sont posées à l'intérieur du compartiment-moteur, caractérisé en ce que les parties de structure portantes sont constituées par une construction-cadre présentant au moins un orifice de passage (3), appelée ci-dessous cadre (1) porteur, en ce que la partie support (20, 30, 40) est fixée dans la zone du passage de roue (2), en ce que le cadre (1) présente au moins un orifice de passage (3) dans la zone du passage de roue (2) et en ce que l'orifice de passage (3) est fermé par une plaque de recouvrement (4), pouvant être appliquée sur la face externe, ultérieurement, c'est-à-dire après l'application de la partie support (20, 30, 40), équipée des groupes supplémentaires (5), et des conduites de raccordement (6).

2. Véhicule automobile selon la revendication 1, caractérisé en ce que la conduite de raccordement (6) d'un groupe supplémentaire (5) est posée au moins partiellement entre la partie support (20, 30, 40) et la plaque de recouvrement (4), en particulier entre la partie support (20, 30, 40) et le cadre (1) porteur.

3. Véhicule automobile selon la revendication 1, caractérisé en ce que la partie support (20, 30, 40) est disposée via une partie intermédiaire (7) sur le cadre (1) porteur.

4. Véhicule selon la revendication 1, caractérisé en ce qu'entre la partie support (20, 30, 40) et le cadre (1) porteur est disposé au moins un élément antivibratile, en particulier un amortisseur de vibrations (8).

5. Véhicule automobile selon la revendication 1, caractérisé en ce que la partie support (20, 30, 40) présente des nervures de refroidissement et/ou des canaux de refroidissement (13) pour l'évacuation de chaleur provenant des groupes supplémentaires (5).

6. Véhicule automobile selon la revendication 1, caractérisé en ce que la partie support (20, 30, 40) est disposée sur le longeron (9) avant de la carrosserie et sur la partie longitudinale supérieure du cadre (1), en particulier dans la zone du dôme élastique (10) de la suspension de roues.

7. Véhicule automobile selon la revendication 1, caractérisé en ce que la partie support (20, 30, 40) présente une fonction de support et de stabilisation.

8. Véhicule automobile selon la revendication 1, caractérisé en ce que la partie support (20) est réalisée sous la forme d'une grille, en ce que la partie support (20) du contour intérieur du cadre (1) est copiée en fonction, et en ce que la partie support (20) présente des points de fixation (11) pour le prémontage des groupes supplémentaires (5).

9. Véhicule automobile selon la revendication 1, caractérisé en ce que la partie support (30, 40) est conçue comme une plaque enfichable largement plane, sur laquelle les groupes supplémentaires (5) peuvent être fixés, en particulier clipsés, et en ce que la partie support (30, 40) est disposée transversalement au cadre (1) et en dépassant de celui-ci.

10. Véhicule automobile selon la revendication 9, caractérisé en ce que plusieurs parties support (30, 40) sont disposées en dépassant du cadre (1) et parallèlement entre elles dans la zone du passage de roue (2).

11. Véhicule automobile selon la revendication 9, caractérisé en ce que la partie support (30, 40) présente des groupes supplémentaires (5) disposés des deux côtés.

12. Véhicule automobile selon la revendication 9, caractérisé en ce que la partie support (30, 40) est reliée au capot-moteur (11) avec le capot-moteur (12) fermé.

13. Véhicule automobile selon la revendication 12, caractérisé en ce que la partie support (30, 40) est enclenchée avec le capot-moteur (12) et/ou est montée derrière et/ou est verrouillée.

14. Procédé pour la fabrication d'un véhicule automobile, avec partie support disposée dans le compartiment-moteur et pouvant être fixée au moins indirectement sur des parties de structure portantes de la partie avant du véhicule, procédé avec lequel la partie support et les conduites de raccordement des groupes supplémentaires sont montées dans le compartiment-moteur, pour la fabrication d'un véhicule automobile selon la revendication 1, caractérisé en ce qu'une construction-cadre présentant au moins un orifice de passage (3) dans la zone du passage de roue (2), appelée ci-dessous cadre (1) porteur, est fabriquée comme structure portante du véhicule automobile, en ce que la partie support (20, 30, 40) est fixée après le laquage du cadre (1) porteur dans la zone de l'orifice de passage (3) et les conduites de raccordement (6) sont posées et raccordées, et en ce que l'orifice de passage (3) est fermé ensuite par une plaque de recouvrement (4).

15. Procédé selon la revendication 14, caractérisé en ce que la conduite de raccordement (6) d'un groupe supplémentaire (5) est posée au moins partiellement entre le cadre porteur (1) et la plaque de recouvrement (4).

16. Procédé selon la revendication 14, caractérisé en ce que la conduite de raccordement (6) d'un groupe supplémentaire (5) est posée entre la partie support (20, 30, 40) et la plaque de recouvrement (4), en particulier entre le cadre (1) et la partie support (20, 30, 40).
